# EUROPÄISCHE PATENTANMELDUNG

(11) **EP 3 575 776 A1**
(43) Veröffentlichungstag der Anmeldung: **04.12.2019**
(21) Anmeldenummer: 19176559.3
(22) Anmeldetag: 24.05.2019
(51) Int. Cl.: G01N 21/3563, G01N 21/359, G01N 21/95

(54) **MESSSYSTEM FÜR KLEINVOLUMIGE SCHÜTTGÜTER**

(30) Priorität: 30.05.2018 DE 102018112955
(71) Anmelder: Kraemer Pneumatik, 64291 Darmstadt (DE)
(72) Erfinder: Kraemer, Thilo, 64291 Darmstadt (DE); Elsner, Claus, 63768 Hösbach (DE)
(74) Vertreter: Hamel, Armin

(57) **Zusammenfassung**

Die Erfindung betrifft ein Messsystem (1) für kleinvolumige Schüttgüter, umfassend mindestens eine lichtdurchlässige Aufnahmevorrichtung (2) für die Aufnahme von zumindest einem kleinvolumigen Schüttgut (3), wie zum Beispiel einer Tablette, eine erste Lichtquelle (5), die oberhalb der Aufnahmevorrichtung (2) angeordnet ist, sowie einen Detektor (9) für Transmission und/oder Reflexion. Unterhalb der Aufnahmevorrichtung (2) sind eine Messfaser (8) sowie eine Lichtfaser (6) vorgesehen, wobei die Lichtfaser (6) die Messfaser (8) zumindest teilweise umgibt und wobei die Messfaser (8) mit dem Detektor (9) und die Lichtfaser (6) mit einer zweiten Lichtquelle (7) verbunden ist.

## Beschreibung

Die Erfindung betrifft ein Messsystem für kleinvolumige Schüttgüter nach dem Oberbegriff des Patentanspruchs 1.

Mit einem Messsystem kann die Qualität von kleinvolumigen Schüttgütern, zum Beispiel von Tabletten, geprüft werden.

So ist aus US 4734584 A ein Messsystem zur Qualitätsüberwachung von Prüflingen beschrieben, das eine lichtdurchlässige Aufnahmevorrichtung, eine NIR-Strahlungsquelle und einen Detektor für Transmission und einen weiteren Detektor für Transmission umfasst.

Des Weiteren ist aus DE 10 2015 109 263 A1 ein Messsystem zur Qualitätsüberwachung und zur Wirkstoffbestimmung von Prüflingen bekannt, das mindestens eine lichtdurchlässige Aufnahmevorrichtung für die Aufnahme von zumindest einem Prüfling, eine NIR-Strahlungsquelle sowie einen Detektor für Transmission und/oder Reflexion enthält. Das Messsystem umfasst zudem eine erste Messoptik, mit der die vom Prüfling durchgelassene NIR-Strahlung aufnehmbar und an den Detektor weiterleitbar ist und eine zweite Messoptik, mit der die vom Prüfling reflektierte NIR-Strahlung aufnehmbar und an den Detektor weiterleitbar ist. Des Weiteren weist das Messsystem einen optischen Multiplexer auf, der mit der ersten Messoptik sowie der zweiten Messoptik verbunden ist und zwischen der ersten Messoptik und der zweiten Messoptik sowie dem Detektor angeordnet ist.

Diese Messsysteme besitzen jedoch einen recht komplexen Aufbau, da sie entweder zwei Detektoren oder einen Multiplexer aufweisen müssen, falls nur ein Detektor vorgesehen ist.

Aufgabe der vorliegenden Erfindung ist es daher, ein Messsystem bereitzustellen, das sehr einfach aufgebaut und leicht zu warten ist.

Diese Aufgabe wird nach den Merkmalen des Patentanspruchs 1 gelöst. Weitere vorteilhafte Ausgestaltungen der Erfindung sind jeweils Gegenstand der Unteransprüche. Diese können in technologisch sinnvoller Weise miteinander kombiniert werden. Die Beschreibung, insbesondere im Zusammenhang mit der Zeichnung, charakterisiert und spezifiziert die Erfindung zusätzlich.

Die Erfindung betrifft somit ein Messsystem für kleinvolumige Schüttgüter, mit dem die Qualität dieser kleinvolumigen Schüttgüter überprüft werden kann. Bei diesen Schüttgütern handelt es sich beispielsweise um pharmazeutische Produkte oder Nahrungsergänzungsmittel, die in Form von Tabletten, Pillen, Zäpfchen oder Körnern vorliegen können. Das Messsystem weist eine lichtdurchlässige Aufnahmevorrichtung für die Aufnahme von einem kleinvolumigen Schüttgut, zum Beispiel einer Tablette, auf. Die Aufnahmevorrichtung kann dabei Teil einer Transportvorrichtung, zum Beispiel einem Transportstern oder Transportrechen, sein, mit der das Schüttgut transportiert wird. Das Messsystem weist einen Detektor für Transmission und/oder Reflexion und zumindest eine Lichtquelle auf, wobei oberhalb der Aufnahmevorrichtung eine erste Lichtfaser oder ein Spiegelsystem, aufweisend mindestens ein Spiegel, angeordnet ist, mit dem Licht auf das Schüttgut leitbar ist. Die Strahlung geht dabei durch das Schüttgut hindurch und von einer Messfaser aufgenommen wird, die unterhalb der Aufnahmevorrichtung angeordnet und mit dem Detektor verbunden ist. Die durchgelassene Lichtstrahlung wird über die Messfaser an einen Detektor weitergeleitet, so dass dadurch die Transmission gemessen werden kann.

Unterhalb der Aufnahmevorrichtung ist eine zweite Lichtfaser vorgesehen, mit der Licht auf das Schüttgut leitbar ist. Über diese zweite Lichtfaser wird die Strahlung von der zumindest einen Lichtquelle auf das Schüttgut gebracht, wobei die Strahlung von dem Schüttgut reflektiert und von der Messfaser aufgenommen wird. Es versteht sich, dass anstelle der zweiten Lichtfaser auch ein zweites Spiegelsystem vorgesehen werden kann, über das das Licht auf das Schüttgut gebracht wird. Auch dieses Spiegelsystem kann aus mehr als einem Spiegel bestehen. Über die Messfaser gelangt die reflektierte Strahlung schließlich zu dem Detektor. Über diese reflektierte Strahlung wird die Reflexion erhalten. Vorteilhaft bei diesem Messsystem ist, dass es sehr kompakt aufgebaut ist, weil es nur einen Detektor besitzt, weshalb es auch sehr wartungsarm ist. Vorteilhaft ist zudem, dass die Messfaser wenig störanfällig ist. Mit diesem Detektor kann sowohl die Reflexion als auch die Transmission des zu prüfenden Schüttguts gemessen werden. Soll die Reflexion gemessen werden, so wird zuerst Licht über die zweite Lichtfaser auf das Schüttgut geleitet. Nachdem die Reflexion gemessen wurde, wird Licht über die erste Lichtfaser auf das Schüttgut gebracht, so dass die Transmission gemessen werden kann. Da der Detektor sowohl für Transmissionsmessungen als auch für Reflexionsmessungen ausgelegt ist, ist es somit möglich, die Reflexion und auch die Transmission oder bei Bedarf nur die Transmission oder nur die Reflexion zu messen.

Vorzugsweise ist oberhalb der Aufnahmevorrichtung sowie unterhalb der Aufnahmevorrichtung jeweils eine Shutterblende vorgesehen. Diese Shutterblenden werden erst kurz vor der entsprechenden Messung geöffnet und nach der Messung wieder geschlossen, wodurch der Prüfling nur während der Messung bestrahlt wird. Dies hat den Vorteil, dass sich der Prüfling nicht stark zu erwärmt. So ist es nämlich möglich, dass sich durch eine zu starke Erwärmung des Prüflings bestimmte Inhaltsstoffe des Prüflings zumindest teilweise zersetzen. Eine Zersetzung von Inhaltsstoffen würde natürlich zu einer Verfälschung der Messergebnisse führen.

Ein weiterer Vorteil besteht darin, dass sich das Messsystem sowohl für Mehrfachpunktmessungen als auch für dezentrale Einzelpunktmessungen am Schüttgut eignet.

In einer anderen bevorzugten Ausführungsform ist die erste Lichtfaser oder das Spiegelsystem mit einer ersten Lichtquelle verbunden. Die unterhalb der Aufnahmevorrichtung vorgesehene zweite Lichtfaser ist wiederum an einer zweiten Lichtquelle angeordnet. Damit besitzt das Messsystem sowohl für die Transmissionsmessung als auch für die Reflexionsmessung eine eigene Lichtquelle, wobei die Lichtquelle für die Reflexionsmessung eine geringere Intensität aufweisen kann als die Lichtquelle für die Transmissionsmessung.

In einer weiteren Ausführungsform sind die erste Lichtfaser und die zweite Lichtfaser an einem Umschalter angeordnet, wobei der Umschalter mit einer Lichtquelle verbunden ist. Über den Umschalter kann wahlweise die erste Lichtfaser oder die zweite Lichtfaser angesteuert werden. Vorteilhaft bei dieser Ausführungsform ist, dass das Messsystem nur eine Lichtquelle aufweisen muss, mit der sowohl Reflexionsmessungen als auch Transmissionsmessungen durchgeführt werden können. Es versteht sich, dass die Lichtfasern auch durch Spiegelsysteme ersetzt werden können.

In einer weiteren bevorzugten Ausführungsform ist ein Antrieb vorgesehen, mit dem die erste Lichtfaser oder ein erstes Spiegelsystem sowie die zweite Lichtfaser zusammen mit der Messfaser relativ zu der Aufnahmevorrichtung bewegbar sind. Dadurch können einzelne Bereiche des Schüttguts vermessen werden. Mittels eines Rechners, zum Beispiel einem PC oder einem Embedded System, der an dem Detektor angeschlossen ist, wird über die ermittelten Werte für die Transmission und für die Reflexion die Qualität des Schüttguts sowie die in dem Schüttgut enthaltenen Wirkstoffe bestimmt. Die Qualität sowie der Wirkstoffgehalt können zum Beispiel mittels Chemometrik bestimmt werden. Da sowohl Werte für die Reflexion als auch für die Transmission erhalten werden, kann die Qualität der Schüttgüter sowie die in den Schüttgütern enthaltenen Wirkstoffe sehr genau bestimmt werden.

Bevorzugt weist das Messsystem ein modular aufgebautes Gestell auf, das in einem Bereich trennbar ausgebildet ist, so dass die erste Lichtfaser bzw. das Spiegelsystem aus dem Messsystem entfernbar sind. Möchte man mit dem Messsystem somit nur die Reflexion messen, so kann die die erste Lichtfaser bzw. das Spiegelsystem aus dem Messsystem entfernt werden.

Vorzugsweise handelt es sich bei den beiden Lichtquellen um NIR-Strahlungsquellen (NIR = nahes Infrarot), weil die NIR-Strahlung keinen Einfluss auf die Messwerte für die Reflexion und für die Transmission hat, falls die Aufnahmevorrichtung aus einem lichtdurchlässigen Material besteht. Die verwendete NIR-Strahlung weist eine Wellenlänge von 760 bis 2.500 nm bzw. eine Frequenz von 12.500 bis 4.000 cm⁻¹ auf.

Die lichtdurchlässige Aufnahmevorrichtung kann vorzugsweise aus Quarzglas, Kunststoff oder Saphir bestehen. Solche Materialien sind gängig und daher auch relativ preiswert.

In einer bevorzugten Ausführungsform ist zwischen der ersten Lichtquelle und der Aufnahmevorrichtung ein Linsensystem angeordnet. Vorzugsweise handelt es sich bei diesem Linsensystem um ein System mit mindestens einer Linse, vorzugsweise einer Sammellinse. Durch dieses Linsensystem kann die von der ersten Lichtquelle kommende Strahlung fokussiert werden, wodurch die Strahlungsausbeute erhöht wird.

In einer weiteren Ausführungsform ist zwischen der zweiten Lichtfaser und der Aufnahmevorrichtung eine Streulichtblende vorgesehen. Diese Streulichtblende verhindert, dass seitlich einfallende Strahlung auf das Schüttgut gelangt und so die Reflexionsmessungen verfälscht.

Damit das Messsystem noch kompakter aufgebaut ist, kann in einer besonders bevorzugten Ausführungsform die unterhalb der Aufnahmevorrichtung angeordnete zweite Lichtfaser die Messfaser zumindest teilweise umgeben.

Ausführungsbeispiele werden in Figuren gezeigt und im Folgenden näher erläutert. Es zeigen:
- Figur 1: eine schematische Ansicht eines Messsystems zur Qualitätsüberwachung von kleinvolumigen Schüttgütern;
- Figur 2: eine erste Variante des in Figur 1 gezeigten Messsystems;
- Figur 3: eine zweite Variante des in Figur 1 gezeigten Messsystems und
- Figur 4: eine Variante des in Figur 3 gezeigten Messsystems.

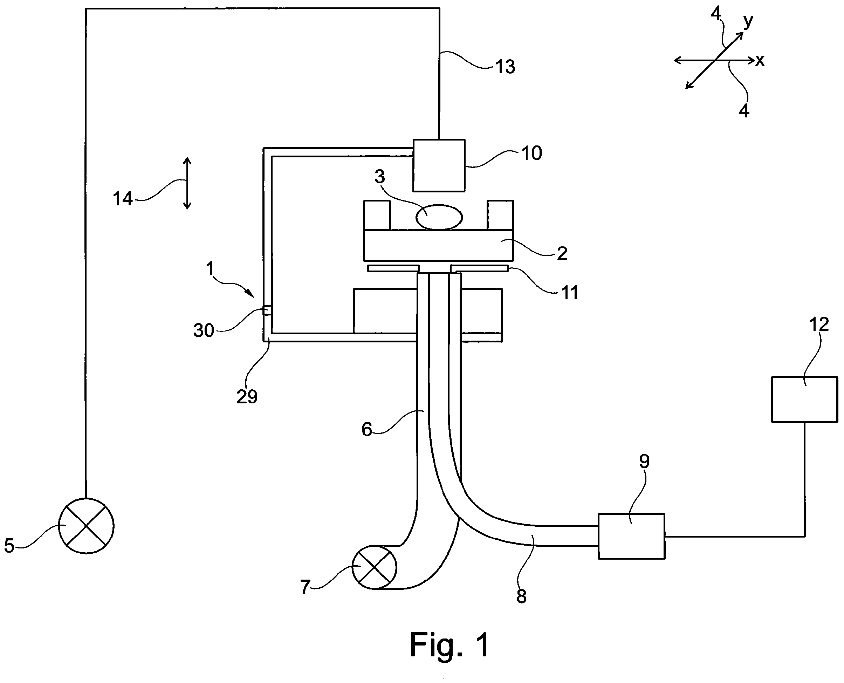

In Figur 1 ist eine schematische Ansicht eines Messsystems 1 zur Qualitätsüberwachung für kleinvolumige Schüttgüter dargestellt. Bei diesen kleinvolumigen Schüttgütern kann es sich zum Beispiel um Tabletten, Pillen, Zäpfchen oder Körner handeln. Das Messsystem 1 weist eine lichtdurchlässige Aufnahmevorrichtung 2 für die Aufnahme von einem kleinvolumigen Schüttgut 3 auf. Diese Aufnahmevorrichtung 2 kann Teil einer Transportvorrichtung, beispielsweise eines Transportsterns, sein und beispielsweise aus Quarzglas oder Saphir bestehen. Durch dieses Transportsystem, kann das Schüttgut weiter zu einem Prüfsystem (nicht gezeigt) transportiert (vergleiche Richtungspfeil 4) werden. In diesem Prüfsystem kann die Härte, der Durchmesser oder aber auch die Länge dieser Schüttgüter bestimmt werden.

Das Messsystem 1 weist eine erste Lichtquelle 5 auf, an der eine erste Lichtfaser 13 angebracht ist, über die die Strahlung der ersten Lichtquelle 5 auf das Schüttgut 3 gebracht werden kann. Das zu prüfende Schüttgut 3 wird somit von oben bestrahlt, wobei die Strahlung durch das Schüttgut 3 hindurchgeht und die durchgelassene Strahlung von einer Messfaser 8 aufgenommen wird, die unterhalb der Aufnahmevorrichtung 2 angeordnet ist. Diese durchgelassene Strahlung wird über die Messfaser 8 an einen Detektor 9 weitergeleitet, so dass dadurch die Transmission ermittelt werden kann. Eine zweite Lichtfaser 6 umgibt die Messfaser 8 zumindest teilweise, wobei die zweite Lichtfaser 6 mit einer zweiten Lichtquelle 7 verbunden ist. Über die zweite Lichtfaser 6 gelangt die Strahlung der zweiten Lichtquelle 7 von unten auf das Schüttgut 3, wobei die Strahlung von dem Schüttgut 3 reflektiert und von der Messfaser 8 aufgenommen wird. Über die Messfaser 8 wird die reflektierte Strahlung an den Detektor 9 weitergeleitet. Über diese reflektierte Strahlung wird die Reflexion des Schüttguts 3 erhalten. Vorteilhaft bei diesem Messsystem 1 ist, dass es sehr kompakt aufgebaut ist, weil es nur einen Detektor 9 besitzt. Mit diesem Detektor 9 kann sowohl die Reflexion als auch die Transmission des zu prüfenden Schüttguts 3 ermittelt werden. Dazu wird zuerst eine der beiden Lichtquellen, zum Beispiel die erste Lichtquelle 5, eingeschaltet und es wird die Transmission gemessen. Anschließend wird die erste Lichtquelle 5 wieder ausgeschaltet und zweite Lichtquelle 7 eingeschaltet, so dass die Reflexion das Schüttgut 3 gemessen wird.

Vorteilhafterweise ist die Anordnung bestehend aus der Messfaser 8 und der sie umgebenden zweiten Lichtfaser 6 an dem der Aufnahmevorrichtung 2 abgewandten Ende Y-förmig ausgebildet, so dass die Messefaser 8 mit dem Detektor 9 und die zweite Lichtfaser 6 mit der zweiten Lichtquelle 7 verbunden sind. Da solche platzsparenden Y-förmigen Leitungen bekannt sind, wird nicht weiter auf sie eingegangen.

Vorzugsweise ist zwischen der ersten Lichtquelle 5 und der Aufnahmevorrichtung 2 ein Linsensystem 10 angeordnet. Vorzugsweise handelt es sich bei dem Linsensystem 10 um ein System umfassend mindestens eine Linse, vorzugsweise eine Sammellinse. Durch diese mindestens eine Linse kann die von der ersten Lichtquelle 5 kommende Strahlung fokussiert werden, wodurch die Lichtausbeute erhöht werden kann. Zwischen der Lichtfaser 6 und der Aufnahmevorrichtung 2 kann auch eine Streulichtblende 11 vorgesehen. Diese Streulichtblende 11 verhindert, dass seitlich einfallende Strahlung auf das Schüttgut 3 gelangt und so die Reflexionsmessungen verfälscht. Auf diese Streulichtblende 11 kann aber auch verzichtet werden, insbesondere dann, wenn die Lichtfaser 6 nahe genug an der Aufnahmevorrichtung 2 angeordnet ist.

Vorzugsweise sind die beiden Lichtquellen 5, 7 NIR-Strahlungsquellen (NIR = nahes Infrarot). Besteht die Aufnahmevorrichtung 2 aus einem lichtdurchlässigen Material, wie zum Beispiel Quarzglas oder Saphir, so hat die NIR-Strahlung keinen Einfluss auf die Messwerte für die Reflexion und für die Transmission.

Mit diesem Messsystem 1 kann nicht nur die Qualität von dem Schüttgut, sondern auch die in den dem Schüttgut enthaltenen Wirkstoffe sowie deren Gehalt bestimmt werden kann. Das Messsystem 1 ist vorzugsweise Teil eines Prüfsystems für Schüttgüter, zum Beispiel eines Prüfsystems zur Gewichts- und/oder Durchmesser- und/oder Härtebestimmung dieser Schüttgüter. Handelt es sich beispielsweise um ein Messsystem für Tabletten, so kann dieses Messsystem 1 im Prüfgerät, zum Beispiel vor oder gar in einer Bruchkammer angeordnet sein. Möglich ist aber auch, dass das Messsystem 1 vor dem Prüfgerät angeordnet ist und die Schüttgüter, nachdem deren Transmission und Reflexion gemessen wurde, zu dem Prüfgerät transportiert werden.

Mittels eines Rechners 12, zum Beispiel einem PC oder einem Embedded System, der an dem Detektor 9 angeschlossen ist, wird über die ermittelten Werte für die Transmission und für die Reflexion die Qualität des Schüttguts 3 sowie die in dem Schüttgut 3 enthaltenen Wirkstoffe bestimmt. Die Qualität sowie der Wirkstoffgehalt können dabei zum Beispiel mittels Chemometrik bestimmt werden. Da sowohl Werte für die Reflexion als auch für die Transmission erhalten werden, kann die Qualität der Schüttgüter sowie die in den Schüttgütern enthaltenen Wirkstoffe sehr genau bestimmt werden. Vorteilhaft ist, dass das Messsystem 1 sehr kompakt aufgebaut ist und auch Teil eines Prüfsystems sein kann. Vorteilhaft ist ferner, dass es sich um eine schnelle Messtechnik handelt, wobei Fremdlicht und Streustrahlung beispielsweise dadurch ausgeschlossen werden können, indem das Messsystem 1 in einem Gehäuse (nicht dargestellt) untergebracht ist. Das Messsystem 1 läuft zudem sehr stabil, da wenige mechanische Komponenten erforderlich sind. Vorteilhaft ist auch, dass Schüttgüter unabhängig von ihrer Form oder ihres Durchmessers vermessen werden können.

Ein weiterer Vorteil besteht zudem darin, dass auch einzelne Bereiche des Schüttguts 3 vermessen werden können. Dazu wird die erste Lichtfaser 13 sowie die Anordnung umfassend die Lichtfaser 6 und die Messfaser 8 relativ zu der Aufnahmevorrichtung 2 und damit relativ zu dem Schüttgut 3 bewegt, was durch die Doppelpfeile 4, 4' angedeutet ist. Die Relativbewegung kann somit entlang der x- Achse sowie der y-Achse durchgeführt werden, weshalb es möglich ist, das Schüttgut 3 zu scannen, in dem mehrere einzelne Bereiche des Schüttguts 3 nacheinander vermessen werden.

Dazu ist ein Antrieb (nicht dargestellt) vorgesehen, mit dem die Anordnung bestehend aus dem Linsensystem 10 und der ersten Lichtfaser 13 - oder für den Fall, dass an der ersten Lichtfaser 13 kein Linsensystem angebracht ist, nur die erste Lichtfaser 13 - relativ zu der Aufnahmevorrichtung 2 verfahrbar ist.

Denkbar ist natürlich auch, dass die Aufnahmevorrichtung 2 entlang der x- und y-Achse verfahrbar ist.

Zusätzlich kann die Lichtfaser 13 mit dem Linsensystem 10 entlang der z-Achse bewegt werden, was durch den Doppelfeil 14 angedeutet ist. Dazu ist ein Gestell 29 vorgesehen, das mit der Anordnung umfassend das Linsensystem 10 und die Lichtfaser 13 verbunden ist. Dabei kann das Gestell 29 beispielsweise als Teleskopvorrichtung ausgebildet sein, so dass die Lichtfaser 13 mit dem Linsensystem 10 entlang der z-Achse bewegbar ist. Dadurch kann der Abstand zwischen der ersten Lichtfaser 13 sowie der Aufnahmevorrichtung 2 verringert werden, so dass auf die Linse 10 auch verzichtet werden kann. Vorzugsweise ist das Gestell 29 modular aufgebaut und zum Beispiel in einem Bereich 30 trennbar ausgebildet, so dass die Anordnung bestehend aus der Lichtfaser 13 und dem Linsensystem 10 entfernt werden kann, so dass nach der Entfernung der Lichtfaser 13 und des Linsensystems 10 mit dem Messsystem 1 nur noch die Reflexion gemessen werden kann.

Vorzugsweise ist oberhalb der Aufnahmevorrichtung 2 sowie unterhalb der Aufnahmevorrichtung 2 jeweils eine Shutterblende (nicht gezeigt) vorgesehen. Diese Shutterblenden werden erst kurz vor der entsprechenden Messung geöffnet, wodurch der Prüfling 3 nur während der Messung bestrahlt wird. Nach der Messung werden die Shutterblenden wieder geschlossen. Dies hat den Vorteil, dass sich der Prüfling 3 nicht stark zu erwärmt. So ist es nämlich möglich, dass sich durch eine zu starke Erwärmung bestimmte Inhaltsstoffe des Prüflings 3 zumindest teilweise zersetzen. Eine Zersetzung von Inhaltsstoffen würde zu einer Verfälschung der Messergebnisse führen.
In dem Ausführungsbeispiel nach Figur 1 kann eine erste Shutterblende zwischen dem Linsensystem 10 und der Aufnahmevorrichtung 2 oder aber auch zwischen dem Linsensystem 10 und der ersten Lichtfaser 13 angeordnet sein. Eine zweite Shutterblende ist vorzugsweise zwischen der Blende 11 und der zweiten Lichtfaser 6, die die Messfaser 8 zumindest teilweise umgibt, angebracht. Dabei ist es möglich, dass die Blende 11 als Shutterblende ausgebildet ist, wodurch auf eine zusätzliche Shutterblende unterhalb der Aufnahmevorrichtung 2 verzichtet werden könnte.

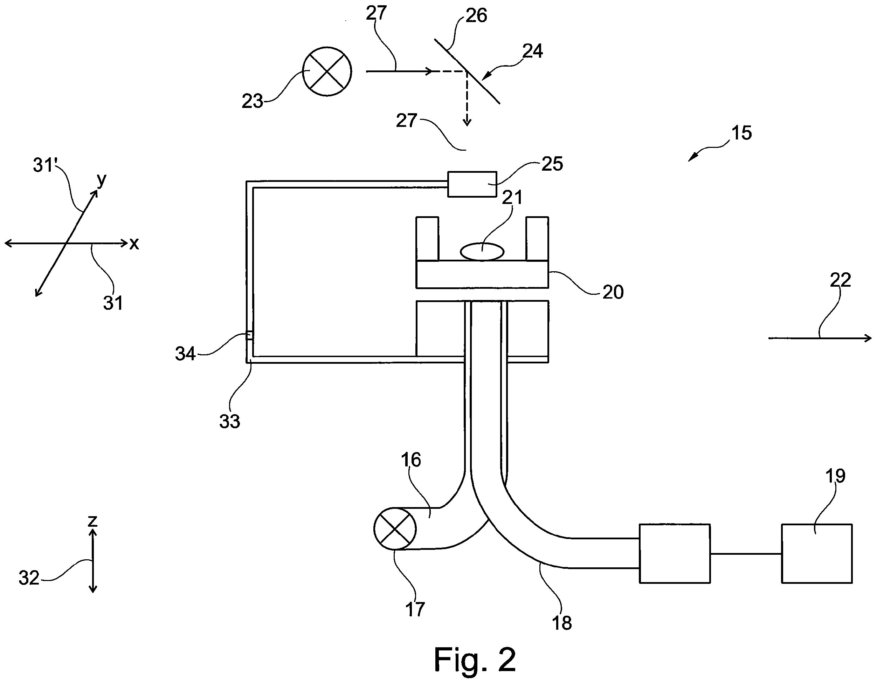

In Figur 2 ist eine erste Variante des Messsystems nach Figur 1 gezeigt. Dieses Messsystem 15 weist wiederum eine zweite Lichtfaser 16 auf, die mit einer zweiten Lichtquelle 17, vorzugsweise einer NIR-Strahlungsquelle, verbunden ist und eine Messfaser 18 zumindest teilweise umgibt. Diese Messfaser 18 ist mit einem Detektor 19 für Transmission und Reflexion verbunden. Die Anordnung bestehend aus der zweiten Lichtfaser 16 und der Messfaser 18 ist unterhalb einer Aufnahmevorrichtung 20 für die Aufnahme eines kleinvolumigen Schüttguts 21, zum Beispiel einer Tablette, einer Pille, eines Zäpfchens oder eines Korns, angeordnet. Die Strahlung gelangt somit von der zweiten Lichtquelle 17 über die Lichtfaser 16 auf das Schüttgut 21. Diese Strahlung wird von dem Schüttgut 21 reflektiert und die reflektierte Strahlung von der Messfaser 18 aufgenommen, so dass über diese reflektierte Strahlung die Reflexion ermittelt werden kann.

Auch diese Aufnahmevorrichtung 20 kann Teil einer Transportvorrichtung sein, mit der das Schüttgut 3 in Richtung (Richtungspfeil 22) eines Prüfsystems (nicht gezeigten) bewegt werden kann. Vorzugsweise besteht die Aufnahmevorrichtung 20 aus Quarzglas, Kunststoff oder Saphir. Insofern unterscheidet sich dieses Messsystem 15 im unteren Bereich nicht von dem in Figur 1 dargestellten Messsystem, abgesehen davon, dass eine Streulichtblende nicht vorgesehen ist. Es ist ein Spiegelsystem 24 vorgesehen, über das Strahlung 27 einer ersten Lichtquelle 23 in Richtung einer Linse 25 und somit auf das Schüttgut 21 geführt wird. Auch diese Lichtquelle 23 ist vorzugsweise eine NIR-Strahlungsquelle. Das Spiegelsystem 24 besteht in diesem Ausführungsbeispiel nur aus einem Spiegel 26, wobei das Spiegelsystem 24 natürlich auch aus mehreren Spiegeln bestehen kann (nicht dargestellt), die die Strahlung in Richtung der Linse 25 und schließlich auf das Schüttgut 21 lenken. Die Strahlung 27 durchdringt das Schüttgut 21 zumindest teilweise und wird von der Messfaser 18 aufgenommen und an den Detektor 19 weitergeleitet. Über die Strahlung, die das Schüttgut 21 durchdringt, wird die Transmission ermittelt.

Von Vorteil bei dieser Ausführungsform ist, dass die von der ersten Lichtquelle 23 kommende Strahlung zwar das Schüttgut 21 erreicht, jedoch die von der Lichtquelle 23 abgestrahlte Wärme aufgrund des großen Abstands der Lichtquelle 23 zu dem Schüttgut 21 nicht zu dem Schüttgut 21 gelangen kann. Damit hat die von der ersten Lichtquelle 23 abgestrahlte Wärme keinen Einfluss auf die Messungen.

Auch können einzelne Bereiche des Schüttguts 21 vermessen werden. Dazu wird das Spiegelsystem 24 bzw. die Lichtfaser 17 zusammen mit der Messfaser 18 relativ zu der Aufnahmevorrichtung 20 und damit relativ zu dem Schüttgut 21 bewegt, was durch die Doppelpfeile 31, 31' angedeutet ist. Die Relativbewegung kann somit entlang der x- und y-Achse durchgeführt werden, weshalb ist es möglich, ein einzelnes Schüttgut 21 zu scannen, in dem mehrere einzelne Bereiche des Schüttguts 21 nacheinander vermessen werden.

Zusätzlich kann das Spiegelsystem 24 zusammen mit dem Linsensystem 25 entlang der z-Achse bewegt werden, was durch den Doppelfeil 32 angedeutet ist. Dazu ist ein Gestell 33 vorgesehen, das mit der Anordnung umfassend das Linsensystem 25 und das Spiegelsystem 24 verbunden ist. Vorzugsweise ist das Gestell 33 modular aufgebaut und trennbar, zum Beispiel im Bereich 34, so dass die Anordnung bestehend aus dem Linsensystem 25 und dem Spiegelsystem 24 entfernt werden kann, so dass mit dem Messsystem 15 nur die Reflexion gemessen werden kann.

Entsprechende Shutterblenden können auch hier vorgesehen werden, nämlich eine erste Shutterblende unterhalb und eine zweite Shutterblende oberhalb der Aufnahmevorrichtung 20, was jedoch nicht gezeigt ist. Dabei kann die erste Shutterblende zwischen dem Spiegelsystem 24 und dem Linsensystem 25 oder zwischen dem Linsensystem 25 und der Aufnahmevorrichtung 20 angeordnet sein. Die zweite Shutterblende kann zwischen der zweiten Lichtfaser 16, die die Messfaser 18 zumindest teilweise umgibt, und der Aufnahmevorrichtung 20 vorgesehen sein.

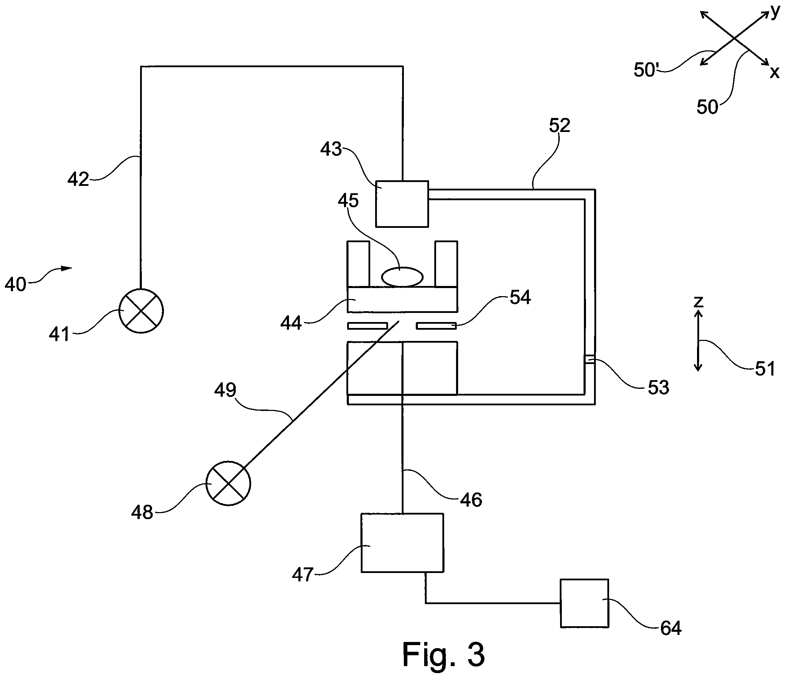

In Figur 3 ist eine zweite Variante des Messsystems nach Figur 1 dargestellt. Dieses Messsystem 40 weist eine erste Lichtquelle 41 auf, die über eine erste Lichtfaser 42 mit einem Linsensystem 43, das zumindest eine Linse, vorzugsweise eine Sammellinse, aufweist, verbunden ist. Mit der ersten Lichtfaser 42 wird ein auf einer Aufnahmevorrichtung 44 liegendes kleinvolumiges Schüttgut 45 mit Licht, vorzugsweise NIR-Strahlung, bestrahlt. Die Aufnahmevorrichtung 44 ist lichtdurchlässig und kann beispielsweise aus Quarzglas, einem Kunststoff oder Saphir bestehen. Das zu prüfende Schüttgut 45 wird somit von oben bestrahlt, wobei die Strahlung zumindest teilweise durch das Schüttgut 45 hindurchgeht und die durchgelassene Strahlung von einer Messfaser 46 aufgenommen wird, die unterhalb der Aufnahmevorrichtung 44 angeordnet ist. Diese durchgelassene Strahlung wird über die Messfaser 46 an einen Detektor 47 weitergeleitet, so dass die Transmission ermittelt werden kann.

Es ist eine zweite Lichtquelle 48 vorgesehen, die über eine zweite Lichtfaser 49 Licht von unterhalb der Aufnahmevorrichtung 44 auf das Schüttgut 45 abgibt. Dieses Licht wird vom Schüttgut 45 reflektiert, wobei das reflektierte Licht von der Messfaser 46 erfasst und an den Detektor 47 weiterleitet wird, so dass die Reflexion erhalten wird.

Die zweite Lichtquelle 48 kann dabei eine niedrigere Intensität wie die erste Lichtquelle 41 aufweisen, weil mit der ersten Lichtquelle 41 die Transmission ermittelt wird und diese daher eine hohe Intensität besitzen muss.

Zwischen der zweiten Lichtfaser 49 und der Aufnahmevorrichtung 44 kann eine Streulichtblende 54 vorgesehen sein. Diese Streulichtblende 54 verhindert, dass seitlich einfallende Strahlung auf das Schüttgut 45 gelangt und so die Reflexionsmessungen verfälscht. Auf diese Streulichtblende 45 kann aber auch verzichtet werden, insbesondere dann, wenn die Lichtfaser 49 nahe genug an der Aufnahmevorrichtung 44 angeordnet ist. Anstelle der Lichtfaser 49 kann auch ein Spiegelsystem vorgesehen sein, dass mindestens einen Spiegel umfasst. Ein solches Spiegelsystem ist in der Figur 3 jedoch nicht dargestellt.

Vorteilhafterweise können auch einzelne Bereiche des Schüttguts 45 vermessen werden. Dazu wird eine Anordnung aus Linsensystem 43 und Lichtfaser 42 bzw. die Lichtfaser 46 relativ zu der Aufnahmevorrichtung 44 und damit relativ zu dem Schüttgut 45 bewegt, was durch die Doppelpfeile 50, 50' angedeutet ist. Die Relativbewegung wird somit entlang der x- und y-Achse durchgeführt, weshalb ist es möglich, das Schüttgut 45 zu scannen, in dem mehrere einzelne Bereiche des Schüttguts 45 nacheinander vermessen werden.

Es versteht sich, dass, wenn die Transmission ermittelt werden soll, die zweite Lichtquelle 48 ausgeschaltet bleiben muss und dass, wenn die Reflexion gemessen werden soll, die Lichtquelle 41 ausgeschaltet belieben muss.

Daneben kann die Lichtfaser 42 zusammen mit dem Linsensystem 43 entlang der z-Achse bewegt werden, was durch den Doppelfeil 51 angedeutet ist. Dazu ist ein Gestell 52 vorgesehen, das mit der Anordnung, umfassend das Linsensystem 43 und die Lichtfaser 42, verbunden ist. Vorzugsweise ist das Gestell 52 modular aufgebaut und zum Beispiel im Bereich 53 trennbar, so dass die Anordnung bestehend aus dem Linsensystem 43 und der Lichtfaser 42 aus dem Messsystem 40 entfernt werden kann. Dadurch kann mit dem Messsystem 40 nur die Reflexion gemessen werden.

Möchte man mit dem Messsystem 40 auch wieder die Transmission messen, so kann die Anordnung aus Linsensystem 43 und Lichtfaser 42 problemlos wieder angebracht werden.

Mittels eines Rechner 64, zum Beispiel einem PC oder einem Embedded System, der an dem Detektor 47 angeschlossen ist, wird über die ermittelten Transmissionswerte und Reflexionswerte die Qualität des Schüttguts 45 sowie die in dem Schüttgut 45 enthaltenen Wirkstoffe bestimmt.

Es versteht sich, dass anstelle der ersten Lichtfaser 42 auch ein Spiegelsystem, wie es in Figur 2 dargestellt ist, vorgesehen sein kann, mit dem Licht auf das Schüttgut 45 geleitet wird. In der Figur 3 ist ein solches Spiegelsystem allerdings nicht gezeigt.

Obwohl nicht dargestellt, so können unterhalb und oberhalb der Aufnahmevorrichtung 44 entsprechende Shutterblenden vorgesehen sein. Shutterblenden sind in Figur 3 nicht darbestellt.

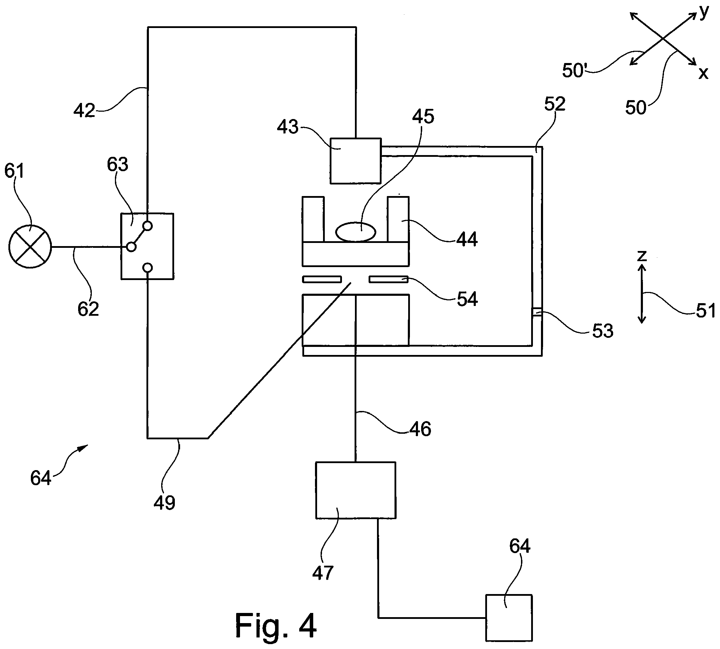

Figur 4 zeigt eine Variante des in Figur 3 dargestellten Messsystems. Dieses Messsystem 60 unterscheidet sich von dem in Figur 3 gezeigten Messsystem darin, dass nur eine Lichtquelle 61 und nicht zwei Lichtquellen vorgesehen sind, weshalb der Einfachhalbheit die meisten Bezugszahlen beibehalten wurden.

Die Lichtquelle 61 gibt dabei Licht über eine Lichtfaser 62 an einen Umschalter 63. Durch Betätigen des Umschalters 63 kann das Licht entweder auf die Lichtfaser 42 oder die Lichtfaser 49 gegeben werden, so dass entweder die Transmission oder die Reflexion gemessen werden kann. In Figur 4 ist der Umschalter 63 derart eingestellt, dass das Licht der Lichtquelle 61 an die erste Lichtfaser 42 gegeben wird, so dass die Transmission gemessen wird. Es versteht sich, dass dabei ebenfalls Shutterblenden (nicht gezeigt) vorgesehen sein können, die erst kurz vor Beginn der entsprechenden Messungen geöffnet werden.

Die Lichtquelle 61 weist eine solch hohe Intensität auf, dass mit ihr nicht nur die Reflexion sondern auch die Transmission gemessen werden kann. Es sind wiederum die zwei Lichtfaser 42 und 49 vorgesehen, wobei mit der ersten Lichtfaser 42 das Schüttgut 45 von oben bestrahlt werden kann. Dabei ist es auch möglich, die beiden Lichtfasern 42 und 49 oder nur eine der beiden Lichtfasern 42 bzw. 49 durch ein entsprechendes Spiegelsystem (nicht dargestellt) zu ersetzen. Ein solches Spiegelsystem kann aus einem oder mehreren Spiegeln bestehen. Diese Strahlung geht zumindest teilweise durch das Schüttgut 45 sowie die Aufnahmevorrichtung 44 und wird von der Messfaser 46 aufgenommen und an den Detektor 47 weitergeleitet, so dass die Transmission erhalten wird. Über der zweiten Lichtfaser 49 gelangt Licht von unten auf das Schüttgut 45, wobei das Licht zumindest teilweise reflektiert wird und das reflektierte Licht von der Messfaser 46 erfasst und an den Detektor 47 weitergeleitet wird, so dass die Reflexion erhalten wird. Mit dem Detektor 47 wird also zum einen die Reflexion und zum anderen die Transmission gemessen, wobei mit dem Detektor 47 die Transmission und/oder die Reflexion erhalten werden kann.

Da sich das Messsystem 60 ansonsten nicht von dem Messsystem nach Figur 3 unterscheidet, ist ein Scannen des Schüttguts 45 natürlich ebenfalls möglich. Das modular aufgebaute Gestell 53 kann dabei auch in Richtung der z-Achse bewegt werden, was durch den Doppelpfeil 51 angedeutet ist.

### Bezugszeichenliste

- 1: Messsystem
- 2: Aufnahmevorrichtung
- 3: Schüttgut
- 4: Doppelpfeil
- 4': Doppelpfeil
- 5: Lichtquelle
- 6: Lichtfaser
- 7: Lichtquelle
- 8: Messfaser
- 9: Detektor
- 10: Linsensystem
- 11: Streulichtblende
- 12: Rechner
- 13: Lichtfaser
- 14: Doppelpfeil
- 15: Messsystem
- 16: Lichtfaser
- 17: Lichtquelle
- 18: Messfaser
- 19: Detektor
- 20: Aufnahmevorrichtung
- 21: Schüttgut
- 22: Richtungspfeil
- 23: Lichtquelle
- 24: Spiegelsystem
- 25: Linsensystem
- 26: Spiegel
- 27: Strahlung
- 28: -
- 29: Gestell
- 30: Bereich
- 31: Doppelpfeil
- 31': Doppelpfeil
- 32: Doppelpfeil
- 33: Gestell
- 34: Bereich
- 35: -
- 36: -
- 37: -
- 38: -
- 39: -
- 40: Messsystem
- 41: Lichtquelle
- 42: Lichtfaser
- 43: Linsensystem
- 44: Aufnahmevorrichtung
- 45: Schüttgut
- 46: Messfaser
- 47: Detektor
- 48: Lichtquelle
- 49: Lichtfaser
- 50: Doppelpfeil
- 50': Doppelpfeil
- 51: Doppelpfeil
- 52: Gestell
- 53: Bereich
- 54: Streulichtblende
- 55: -
- 56: -
- 57: -
- 58: -
- 59: -
- 60: Messsystem
- 61: Lichtquelle
- 62: Lichtfaser
- 63: Umschalter
- 64: Rechner

## Patentansprüche

1. Messsystem (1, 15, 40, 60) für kleinvolumige Schüttgüter, umfassend mindestens eine lichtdurchlässige Aufnahmevorrichtung (2, 20, 44) für die Aufnahme von zumindest einem kleinvolumigen Schüttgut (3, 21, 45), wobei das Messsystem (1, 15, 40, 60) einen Detektor (9, 19, 47) für Transmission und/oder Reflexion und zumindest eine NIR-Strahlungsquelle (5, 7, 17, 23, 41, 48, 61) aufweist, **dadurch gekennzeichnet, dass** oberhalb der Aufnahmevorrichtung (2, 20) eine erste Lichtfaser (13, 42) oder ein Spiegelsystem (24) angeordnet ist, mit dem Licht auf das Schüttgut (3, 21, 45) geleitet wird, und dass unterhalb der Aufnahmevorrichtung (2, 20, 44) eine zweite Lichtfaser (6, 16, 49) oder ein Spiegelsystem vorgesehen ist, mit der Licht auf das Schüttgut (3, 21, 45) geleitet wird, wobei eine Messfaser (8, 18) vorgesehen ist, die unterhalb der Aufnahmevorrichtung (2, 20, 44) angeordnet ist, wobei die Messfaser (8, 18, 46) mit dem Detektor (9, 19, 47) verbunden ist, wobei die erste Lichtfaser (13, 42) mit einer ersten NIR-Strahlungsquelle (5, 23, 41) verbunden ist und wobei die unterhalb der Aufnahmevorrichtung (2, 20, 44) vorgesehene zweite Lichtfaser (6, 16, 49) mit einer zweiten NIR-Strahlungsquelle (7, 17, 48) verbunden ist, oder wobei die erste Lichtfaser (42) und zweite Lichtfaser (49) an einem Umschalter (63) angeordnet sind, der mit einer NIR-Strahlungsquelle (61) verbunden ist, wobei über den Umschalter (63) wahlweise die erste Lichtfaser (42) oder die zweite Lichtfaser (49) angesteuert wird.

2. Messsystem nach Patentanspruch 1, **dadurch gekennzeichnet, dass** ein Antrieb vorgesehen ist, mit dem die erste Lichtfaser (13, 42) oder das Spiegelsystem (24) sowie die zweite Lichtfaser (6, 16, 49) zusammen mit der Messfaser (8, 18, 46) relativ zu der Aufnahmevorrichtung (2, 20, 44) bewegbar sind, so dass einzelne Bereiche des Schüttguts (3, 21, 45) gemessen werden.

3. Messsystem nach Patentanspruch 1, **dadurch gekennzeichnet, dass** ein modular aufgebautes Gestell (29, 33, 52) vorgesehen ist, das sowohl mit der ersten Lichtfaser (13, 42) oder dem entsprechenden Spiegelsystem (24) als auch mit der zweiten Lichtfaser (6, 16, 49) oder dem entsprechenden Spiegelsystem verbunden ist, wobei das Gestell (29, 33, 52) in einem Bereich (30, 34, 53) derart ausgebildet ist, dass es getrennt werden kann, so dass die erste Lichtfaser (13, 42) oder das entsprechende Spiegelsystem (24) aus dem Messsystem (1, 15, 40, 60) entfernt werden kann.

4. Messsystem nach Patentanspruch 1, **dadurch gekennzeichnet, dass** die lichtdurchlässige Aufnahmevorrichtung (2, 20, 44) aus Quarzglas, Kunststoff oder Saphir besteht.

5. Messsystem nach Patentanspruch 1, **dadurch gekennzeichnet, dass** zwischen der ersten Lichtfaser (13, 42) und der Aufnahmevorrichtung (2, 20, 44) ein Linsensystem (10, 25, 43) angeordnet ist.

6. Messsystem nach Patentanspruch 1, **dadurch gekennzeichnet, dass** zwischen der zweiten Lichtfaser (6, 16, 49) und der Aufnahmevorrichtung (2, 44) eine Streulichtblende (11, 54) angeordnet ist.

7. Messsystem nach Patentanspruch 1, **dadurch gekennzeichnet, dass** die unterhalb der Aufnahmevorrichtung (2, 20) angeordnete zweite Lichtfaser (6, 16) die Messfaser (8, 18) zumindest teilweise umgibt.
